# EUROPÄISCHE PATENTANMELDUNG

(11) **EP 1 010 493 A1**
(43) Veröffentlichungstag der Anmeldung: **21.06.2000**
(21) Anmeldenummer: 99125242.0
(22) Anmeldetag: 17.12.1999
(51) Int. Cl.: B23K 26/14

(54) **Verfahren und Vorrichtung zur Lasermaterialbearbeitung mit einem Gasstrom geringer Strömungsgeschwindigkeit**

(30) Priorität: 18.12.1998 DE 19858681
(71) Anmelder: Linde Technische Gase GmbH, 82049 Höllriegelskreuth (DE)
(72) Erfinder: Herrmann, Johann, 85716 Unterschleissheim (DE); Hohenberger, Hans, 80805 München (DE)
(74) Vertreter: Obermüller, Bernhard

(57) **Zusammenfassung**

Die Erfindung betrifft ein Verfahren und eine Vorrichtung zur Lasermaterialbearbeitung, wobei ein fokussierter Laserstrahl (1) auf die zu bearbeitende Werkstückoberfläche (3) geführt wird und zumindest ein Gasstrom (6) gegen die Werkstückoberfläche geleitet wird. Erfindungsgemäß wird der zumindest eine Gasstrom (6) über eine zum Laserstrahl (1) nicht koaxial angeordnete Düse (4) gegen die Werkstückoberfläche (3) geführt, wobei der Gasstrom (6) insgesamt oder zumindest im Mittelwert eine Geschwindigkeit unter 10 m/s aufweist. Bevorzugt besitzt der Gasstrom (6) insgesamt oder zumindest im Mittelwert eine Geschwindigkeit zwischen 0,01 m/s und 5 m/s. Mit Vorteil wird ein im wesentlichen homogenes Strömungsfeld des Gasstromes (6) erzeugt. Die zum Laserstrahl nicht koaxial angeordnete Düse (4) kann Einbauten enthalten.

## Beschreibung

Die Erfindung betrifft ein Verfahren zur Lasermaterialbearbeitung, wobei ein fokussierter Laserstrahl auf die zu bearbeitende Werkstückoberfläche geführt wird und zumindest ein Gasstrom gegen die Werkstückoberfläche geleitet wird. Die Erfindung betrifft darüber hinaus eine Vorrichtung zur Lasermaterialbearbeitung welche Mittel zum Führen eines fokussierten Laserstrahls auf die zu bearbeitende Werkstückoberfläche und Mittel zur Zufuhr zumindest eines Gasstromes gegen die Werkstückoberfläche umfaßt.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Als Laserbearbeitungsverfahren sind vor allem das Laserstrahlschneiden, daß Laserstrahlschweißen und Verfahren der Laserstrahloberflächenbehandlung bekannt. Beim Laserstrahlschneiden wird zwischen drei Verfahrensvarianten unterschieden, dem Laserstrahlbrennschneiden, dem Laserstrahlschmelzschneiden und dem Laserstrahlsublimierschneiden. Bei den Verfahren der Laserstrahloberflächenbehandlung umfassen vor allem das Laserstrahlhärten, das Laserstrahlumschmelzen, das Laserstrahllegieren, das Laserstrahlbeschichten und das Laserstrahlbohren. Die Verfahren der Laserstrahloberflächenbehandlung finden in der Regel dort Verwendung, wo konventionelle Oberflächenverfahren nicht oder nur mit großen Nachteilen eingesetzt werden können.

Bei den aufgezählten Verfahren wird durch die hohe Energie des Laserstrahls Material des zu bearbeitenden Werkstücks erhitzt, aufgeschmolzen oder verdampft. Bei der Lasermaterialbearbeitung kommen üblicherweise Schutz- und/oder Prozeßgase bzw. Arbeitsgase zum Einsatz. Je nach Verfahren und zu bearbeitendem Material können die eingesetzten Gase unterschiedliche Aufgaben zu erfüllen haben. So bewirkt beispielsweise der Einsatz eines harten Gasstrahls einen Laserschnitt, bei Abdeckung durch Schutzgas kann eine Schweißnaht, eine Härtespur, eine Spur um geschmolzenes Material, eine Beschriftung, eine Gravur oder dergleichen erzeugt werden. Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden dazu technische Gase eingesetzt, um diese Materialberarbeitungsprozesse effektiver, schneller und/oder mit verbesserter Qualität durchführen zu können.

Die Gasatmosphäre in der Bearbeitungszone besteht bei den erwähnten Laserbearbeitungsprozessen vielfach aus einem Gemisch aus dem oder den eingesetzten Arbeitsgas(en) und der umgebenden Luft. Als Grund hierfür sind vor allem unzureichende Gaszuführungen zu nennen, die zu Verwirbelungen zwischen Arbeitsgasströmungen und Umgebungsluft führen. Konkret bedeutet das beispielsweise für einzelne Laserbearbeitungsverfahren:
- Laserschweißnähte beispielsweise bei Edelstahlschweißungen werden oxidiert und müssen anschließend nachgearbeitet werden,
- Härtespuren sind oxidiert und müssen anschließend nachgearbeitet werden,
- Schweißnähte enthalten Poren oder es treten andere qualitätsmindernde Merkmale auf.

Vielfach sind die Gasdüsen sehr klein ausgebildet, so daß insbesondere bei schnelleren Schneid- und Schweißprozessen das bearbeitete Material bereits aus dem Schutzgasstrom gelangt, ohne daß vorher eine ausreichende Abkühlung des Materials stattgefunden hat, und an der Luftatmosphäre Nachoxidationen der Oberflächen auftreten können.

Der vorliegenden Erfindung liegt daher die Aufgabe zugrunde, ein Verfahren und eine Vorrichtung der eingangs genannten Art aufzuzeigen, bei welchen der Laserbearbeitungsprozeß durch eine modifizierte Gaszufuhr verbessert wird. Insbesondere sollen Qualitätseinbußen bei der Laserbearbeitung aufgrund der Atmosphäre vermieden werden.

Diese Aufgabe wird erfindungsgemäß dadurch gelöst, daß der zumindest eine Gasstrom über eine zum Laserstrahl nicht koaxial angeordnete Düse gegen die Werkstückoberfläche geführt wird, wobei der Gasstrom insgesamt oder zumindest im Mittelwert eine Geschwindigkeit unter 10 m/s aufweist.

Der Erfindung beruht auf der Idee, die Strömungsgeschwindigkeit des Gasstromes aus der nicht koaxial angeordneten Düse im Vergleich zu üblichen Strömungsgeschwindigkeiten relativ klein zu wählen. Auf diese Weise kann die Vermischung von Schutz- oder Prozeßgasen bzw. Arbeitsgasen mit der umgebenden Luft deutlich veringert werden.

Die erfindungsgemäß angegebene Geschwindigkeit betrifft den Gasstrom nach Austritt aus der Düse. Maximalwert und Mittelwert der Geschwindigkeit sind räumlich betrachtet und bezogen auf das Geschwindigkeitsprofil quer zur Strömumgsrichtung des Gasstromes. Der Unterschied zwischen Maximalwert und Mittelwert der Geschwindigkeit im Strömungsfeld fällt insbesondere dann minimal aus, wenn in der Düse über den durchströmten Querschnitt ein ungefähr gleich großer Strömungswiderstand besteht.

Als Mindestzahl für den Maximalwert bzw. Mittelwert der Geschwindigkeit wird vorteilhafterweise ein Wert von 0,01 m/s oder bevorzugt ein Wert von 0,1 m/s vorgeschlagen. In Ausgestaltung der Erfindung weist der Gasstrom insgesamt oder zumindest im Mittelwert eine Geschwindigkeit zwischen 0,01 m/s und 5 m/s, vorzugsweise eine Geschwindigkeit zwischen 0,1 m/s und 1 m/s, auf.

Wesentlich bei der Erfindung ist die Tatsache, daß eine nicht koaxial zum Laserstrahl angeordnete Düse vorgesehen ist. Derartige Düsen sind aus der WIG-Schweißtechnik als Schleppdüsen bekannt. Dort haben sie die Aufgabe, dem Schweißprozeß nachlaufend die heiße Schweißnaht so lange abzudecken, bis deren Temperatur unter die Reaktionstemperatur abgesunken ist. Die erfindungsgemäß nicht koaxial angeordnete Düse kann grundsätzlich in jeder beliebigen Richtung zur Relativbewegungsrichtung zwischen Laserstrahl und Werkstück ausgerichtet sein. Sie kann insbesondere vorlaufend, quer zur Relativbewegungsrichtung zwischen Laserstrahl und Werkstück oder bevorzugt nachlaufend eingesetzt werden.

Bei der Erfindung wird ein Erzeugen eines im wesentlichen homogenen Strömungsfeldes des Gasstromes mit geringer Geschwindigkeit angestrebt. Die Gasströmung sollte ein möglichst laminares Strömungsprofil aufweisen. Die angestrebte homogene, im wesentlichen parallele Gasströmung gewährleistet, daß innerhalb eines relativ großen Raumes die Reinheit der eingesetzten Gase erhalten bleibt. Die Gase können daher ihre optimale Wirkung für im Bearbeitungsprozeß entfalten. Die Ergebnisse sind konstant und nicht von wechselnden Anteilen an eingewirbelter Umgebungsluft abhängig. Durch die großräumige Gasabdeckung können auch schädliche Reaktionen des noch heißen Materials mit der Atmosphäre wie beispielsweise ein Nachoxidieren wirksam verhindert werden.

Die zum Laserstrahl nicht koaxial angeordnete Düse kann Einbauten umfassen. Mit diesen Einbauten können insbesondere Mittel zur Homogenisierung des Gasstromes vorgesehen sein. Die Düse enthält dazu in der Regel ein Homogenisatormaterial. Bei dem Homogenisatormaterial handelt es sich um flächiges, gasdurchlässiges Material, welches dem Gasfluß auf der ganzen Fläche einen möglichst gleichen Strömungswiderstand entgegenstellt oder am Rand einer höheren und im Zentrum der Strömung einen niedrigeren Strömungswiderstand darstellt. Es kann sich dabei um Lagen von Geweben, Sintermaterial, Stahlwolle, Lochbleche und dergleichen handeln. Auch Materialien wie Holz mit Kanälen in vertikaler Richtung sind denkbar. Dieses Homogenisatormaterial muß gewährleisten, daß zumindest am Rand der Düse eine möglichst homogene Gasströmung auftritt. Dadurch können Verwirbelungen und Vermischungen mit der umgebenden Atmosphäre vermieden werden.

Es können auch Einbauten am Düsenaustritt vorgesehen sein, so daß der Gasstrom über mehrere Öffnungen aus der zum Laserstrahl nicht koaxial angeordneten Düse ausströmt. Der Düsenaustritt kann beispielsweise mit einem Sieb oder Gitter, einem Lochblech, einem Bohrungsfeld oder dergleichen als Einbauten ausgestattet sein. Damit kann die Strömung senkrecht zur Austrittsfläche optimiert werden.

Die Erfindung ermöglicht auch eine Bearbeitung mit einem vergrößerten Arbeitsabstand zwischen Düse und Laserbearbeitungsstelle bzw. Werkstückoberfläche. Dies kann notwendig werden, wenn die Zugänglichkeit am Werkstück eingeschränkt ist. Es konnten Abstände zwischen Bearbeitungspunkt der Lasermaterialbearbeitung und dem Düsenaustritt von bis zu 30 mm realisiert werden.

Die Außenkontur der Düsenaustrittsfläche kann grundsätzlich beliebig gestaltet sein. Runde Austrittsflächen (z.B. kreisförmig) bedeuten in der Regel eine einfachere Fertigung. Rechteckige Austrittsflächen führen in der Regel zu einer besseren Abdeckung. Die Düsenaustrittsflächen können plan, aber auch räumlich gekrümmt sein (z.B. sphärisch). Gekrümmte Austrittsflächen erlauben es, bezüglich des Gasaustritts an der Düse näher an den Arbeitspunkt des Lasers, sowie an die bearbeitete Spur zu gelangen.

In Ausgestaltung der Erfindung wird der zumindest eine Gasstrom über eine zum Laserstrahl nicht koaxial angeordnete Düse gegen die Werkstückoberfläche geführt, wobei die vom Gasstrom durchströmte Fläche am Düsenaustritt zumindest fünfhundert mal größer ist als die vom Laserstrahl bestrahlte Fläche auf der Werkstückoberfläche.

Als Mindestzahl für das Flächenverhältnis wird vorteilhafterweise ein Wert von 1.000 oder bevorzugt ein Wert von 10.000 eingehalten. In Ausgestaltung der Erfindung weist die vom Gasstrom durchströmte Fläche zu der vom Laserstrahl bestrahlten Fläche auf der Werkstückoberfläche ein Verhältnis von 1.000 zu 1 bis 5.000.000 zu 1, vorzugsweise ein Verhältnis von 10.000 zu 1 bis 500.000 zu 1, auf.

Eine alternative oder ergänzende Ausgestaltung der Erfindung besteht darin, daß der zumindest eine Gasstrom über eine zum Laserstrahl nicht koaxial angeordnete Düse gegen die Werkstückoberfläche geführt wird, wobei die vom Gasstrom durchströmte Fläche am Düsenaustritt zumindest 50 mm² beträgt. Die durchströmte Fläche am Düsenaustritt wird dabei außerhalb der nicht koaxial angeordneten Düse quer zur Strömungsrichtung des Gasstromes gemessen.

Bevorzugt beträgt die vom Gasstrom durchströmte Fläche am Düsenaustritt mindestens 100 oder besonders bevorzugt mindestens 500 mm². Besonders gute Ergebnisse bei der Lasermaterialbearbeitung können dadurch erzielt werden, daß die vom Gasstrom durchströmte Fläche am Düsenaustritt zwischen 100 und 50.000 mm², vorzugsweise zwischen 500 und 10.000 mm² beträgt.

Durch die beschriebenen Maßnahmen kann der Laserbearbeitungsprozeß durch die Gasströmung der nicht koaxial angeordneten Düse großflächig abgedeckt werden. Auf diese Weise können qualitätsschädigende Einflüsse der Atmosphäre vermieden oder zumindest wesentlich verringert werden. Die nicht koaxial zum Laserstrahl angeordnete Düse könnte aufgrund des erzeugten Gasstromes als Gasdusche und insbesondere als Schutzgasdusche bezeichnet werden, da das Arbeitsgas ähnlich wie bei einer Wasserdusche zugeführt wird.

In Weiterbildung der Erfindung wird der Gasstrom mit einem Winkel zwischen Laserstrahlachse und Strahlrichtung des Gasstromes zwischen 20° und 70° gegen die Werkstückoberfläche geleitet. Insbesondere Winkel von 30° bis 60° haben sich bewährt. Der optimale Winkel ist abhängig von der Art der Bearbeitung, der Berabeitungsrichtung und/oder von der Zugänglichkeit.

Unabhängig von der nicht koaxial zum Laserstrahl angeordneten Düse kann ein weiterer koaxial zum Laserstrahl verlaufender Gasstrom vorgesehen sein. Derartige Gasströme dienen üblicherweise dem Schutz der optischen Elemente der Lasermaterialbearbeitungsanlage, können aber auch andere Aufgaben erfüllen. Wenn aus einer zum Laserstrahl koaxial angeordneten Düse (z.B. sind hier Standarddüsen einsetzbar) Gas zugeführt wird, sollte die Strömungsgeschwindigkeit geringer sein als die des Gases aus der nicht koaxial angeordneten Düse. Zusätzlich oder alternativ sollte der Raum zwischen Strahlführung mit koaxial zum Laserstrahl angeordneter Düse und der nicht koaxial zum Laserstrahl angeordneten Düse so abgeschlossen sein, daß ein Einsaugen von Luft über diese Öffnung bzw. den Zwischenraum vermieden wird. Durch geeignete Mittel wird also ein Einsaugen von Luft durch den Raum zwischen Laserstrahlführung und der zum Laserstrahl nicht koaxial angeordneten Düse verhindert oder zumindest merklich verringert.

Es ist im Rahmen der Erfindung die Verwendung von zwei oder mehreren nicht koaxial angeordneten Düsen möglich. In diesem Fall addieren sich die von den einzelnen Gasströmen durchströmten Fläche zu einer Gesamtfläche, welche dann die oben beschriebenen Merkmale der Erfindung erfüllen muß. Beispielsweise können im Rahmen der Erfindung auch paarweise gegenüberliegende Düsen zum Einsatz kommen. Auf diese Weise kann der mit der homogenen Gasströmung abgedeckte Bereich des Werkstückes vergrößert werden.

Üblicherweise sind die nicht koaxial angeordneten Düse oder Düsen in einer festen Position zum Laserstrahl angebracht. Es ist aber auch möglich, daß die nicht koaxial angeordneten Düse oder Düsen eine feste Position zum Werkstück aufweisen, wobei die Düsenform der Werkstückform und/oder der Bearbeitungskontur angepaßt ist.

Die Erfindung kann im Zusammenhang mit allen Arten von Lasern zur Anwendung kommen. Vor allem eignet sie sich für den Einsatz bei der Laserbearbeitung mit Eximer-Lasern , Dioden-Lasern, Nd-YAG-Lasern und CO₂-Lasern.

Die Erfindung ist bei allen Laserbearbeitungsprozessen einsetzbar wie beispielsweise beim Schweißen, Schneiden, Beschriften, Umschmelzen, Härten, Glasieren, Legieren, Gaslegieren, Sintern, Abtragen, Biegen, Bohren, Beschichten. Als Werkstückmaterialeien kommen insbesondere alle Materialien in Betracht, bei denen bei höheren Temperaturen Reaktionen mit Gasen auftreten können: Dies sind beispielsweise Metalle, Glas, Holz, Kunststoffe, Silizium.

Als Gase für den erfindungsgemäßen Einsatz eigenen sich grundsätzlich alle Gase oder Gasgemische, insbesondere inerte Gase wie Helium, Neon, Argon, aber auch Stickstoff, Sauerstoff, Kohlendioxid, Wasserstoff, Kohlenwasserstoffe und Gemische der genannten Gase.

Im folgenden soll die Erfindung anhand eines Ausführungsbeispieles schematisch näher erläutert werden.

Hierbei zeigen:
- Figur 1: eine Vorrichtung zur Lasermaterialbearbeitung mit Laserstrahl und nicht koaxial zum Laserstrahl angeordneter Düse
- Figur 2: den Aufbau der in Figur 1 dargestellten nicht koaxial angeordneten Düse und
- Figur 3: ein in der Düse aus Figur 2 eingebautes Prallblech.

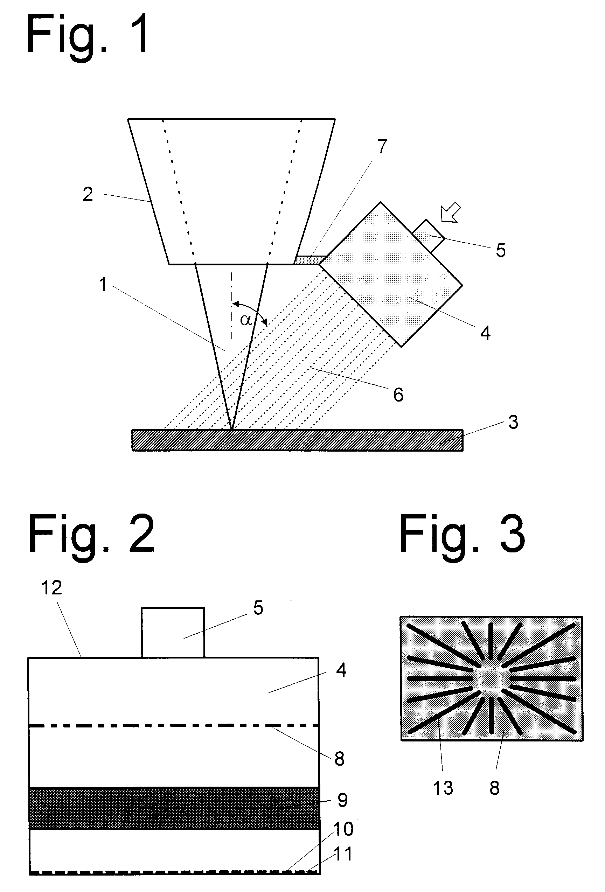

In Figur 1 ist eine Vorrichtung zur Lasermaterialbearbeitung schematisch dargestellt. Der Laserstrahl 1 wird durch eine in der Figur andeutungsweise in Düsenform abgebildete Strahlführungseinrichtung 2 des Laserbearbeitungskopfes der Bearbeitungsvorrichtung fokussiert auf die Oberfläche des Werkstücks 3 geleitet.

Schutz- oder Prozeßgas bzw. Arbeitsgas wird über einen Gaseinlaß 5 in die nicht koaxial zum Laserstrahl angeordnete Düse 4 eingeleitet. Von der Düse 4 wird eine im wesentlichen homogene und parallele Gasströmung 6 auf die Werkstückoberfläche geleitet. Die nicht koaxial angeordnete Düse 4 ist dabei bezüglich der Laserstrahlung so ausgerichtet, daß die Strahlrichtung des Gasstromes aus der Gasdüse gegen die Werkstückoberfläche einen Winkel α gegenüber der Laserstrahlachse (durch strichpunktierte Linie angedeutet) aufweist. Im dargestellten Fall des Ausführungsbeispieles beträgt der Winkel a etwa 45°. Die (mittlere) Geschwindigkeit des Gasstromes 6 liegt bei etwa 0,2 m/s. Das durch die Düse 4 strömende Gasvolumen beträgt beispielsweise nur etwa 20 cm³ pro cm² Austrittsfläche und Sekunde.

Durch die Strahlführungseinrichtung 2 des Laserbearbeitungskopfes der gezeigten Bearbeitungsvorrichtung kann über die koaxial angeordnete Düse 2 zusätzlich Gas zugeführt werden.

Zwischen der Strahlführungseinrichtung 2 des Laserbearbeitungskopfes und der nicht koaxial angeordneten Düse 4 ist eine Abdeckung 7 vorgesehen, die ein Einsaugen und/oder Einströmen von Luft durch den Raum bzw. Spalt zwischen Laserstrahlführung bzw. der koaxial ausgerichteten Düse 2 und der zum Laserstrahl nicht koaxial angeordneten Düse 4 unterbindet.

Figur 2 zeigt beispielhaft den Aufbau einer in Figur 1 dargestellten nicht koaxial angeordneten Düse 4 im Detail. Vom Gehäuse 12 umfaßt enthält die Düse 4 einen Gaseinlaß 5, ein Prallblech 8, ein Homogenisatormaterial 9 (Material zur Homogenisierung der Gasströmung) und eine Austrittsfläche versehen mit Mitteln 10 und 11, um dem Gasstrom eine Richtung zu geben.

Das Prallblech 8 ist in Figur 3 in einem Beispiel näher dargestellt. Die Öffnungsschlitze 13 sorgen dafür, daß keine gerichtete Strömung des Gases auf das Homogenisatormaterial 9 trifft. Das Prallblech weist beispielsweise die Maße 30 mm x 40 mm und eine Stärke von 1 mm auf.

Das Prallblech 8 zum Erzeugen einer ungerichteten Strömung des Gases auf das Homogenisatormaterial 9 muß nicht zwingend in der Düse 4 vorhanden sein. Alternativ oder aber ergänzend kann auch der Gaseinlaß 5 dafür sorgen, daß keine gerichtete Strömung des Gases auf das Homogenisatormaterial 9 trifft. Dies kann beispielsweise durch die Gestaltung des Gaseinlasses 5 gewährleistet werden (z.B. Gaseinlaß über Sintertöpfe).

Das Homogenisatormaterial 9 besteht beispielsweise aus Stahlwolle. Eine typische Stärke für das Homogenisatormaterial 9 liegt bei 3 mm. Das Homogenisatormaterial 9 weist beispielsweise die Maße 30 mm x 40 mm auf.

Am Gasaustritt der Düse 4 ist im Ausführungsbeispiel ein Bohrungsfeld 10 mit einer Vielzahl von Öffnungen 11 (Bohrungen) eingebaut. Das Bohrungsfeld 10 hat beispielsweise die Maße 30 mm x 40 mm und eine Stärke von 1 mm. Die Größe der Bohrungen 11 liegt beispielsweise bei einem Durchmesser von 0,6 mm.

## Patentansprüche

1. Verfahren zur Lasermaterialbearbeitung, wobei ein fokussierter Laserstrahl (1) auf die zu bearbeitende Werkstückoberfläche (3) geführt wird und zumindest ein Gasstrom (6) gegen die Werkstückoberfläche geleitet wird, **dadurch gekennzeichnet**, daß der zumindest eine Gasstrom (6) über eine zum Laserstrahl nicht koaxial angeordnete Düse (4) gegen die Werkstückoberfläche (3) geführt wird, wobei der Gasstrom (6) insgesamt oder zumindest im Mittelwert eine Geschwindigkeit unter 10 m/s aufweist.

2. Verfahren nach Anspruch 1, dadurch gekennzeichnet, daß der Gasstrom (6) insgesamt oder zumindest im Mittelwert eine Geschwindigkeit zwischen 0,01 m/s und 5 m/s aufweist.

3. Verfahren nach Anspruch 2, dadurch gekennzeichnet, daß der Gasstrom (6) insgesamt oder zumindest im Mittelwert eine Geschwindigkeit zwischen 0,1 m/s und 1 m/s aufweist.

4. Verfahren nach einem der Ansprüche 1 bis 3, dadurch gekennzeichnet, daß ein im wesentlichen homogenes Strömungsfeld des Gasstromes (6) erzeugt wird.

5. Verfahren nach einem der Ansprüche 1 bis 4, dadurch gekennzeichnet, daß die zum Laserstrahl nicht koaxial angeordnete Düse (5) Einbauten (8, 9, 10) umfaßt.

6. Verfahren nach einem der Ansprüche 1 bis 5, dadurch gekennzeichnet, daß der Gasstrom (6) über mehrere Öffnungen (11) aus der zum Laserstrahl nicht koaxial angeordneten Düse (4) ausströmt.

7. Verfahren nach einem der Ansprüche 1 bis 6, dadurch gekennzeichnet, daß die vom Gasstrom (6) durchströmte Fläche zumindest fünfhundert mal größer ist als die vom Laserstrahl bestrahlte Fläche auf der Werkstückoberfläche.

8. Verfahren nach einem der Ansprüche 1 bis 6, dadurch gekennzeichnet, daß die vom Gasstrom (6) durchströmte Fläche am Düsenaustritt zumindest 50 mm² beträgt.

9. Verfahren nach einem der Ansprüche 1 bis 8, dadurch gekennzeichnet, daß der Gasstrom (6) mit einem Winkel (α) zwischen Laserstrahlachse und Strahlrichtung des Gasstromes zwischen 20° und 70° gegen die Werkstückoberfläche (3) geleitet wird.

10. Verfahren nach einem der Ansprüche 1 bis 9, dadurch gekennzeichnet, daß ein weiterer koaxial zum Laserstrahl (1) verlaufender Gasstrom vorgesehen ist.

11. Vorrichtung zur Lasermaterialbearbeitung umfassend Mittel zum Führen eines fokussierten Laserstrahls (1) auf die zu bearbeitende Werkstückoberfläche (3) und Mittel (4, 5) zur Zufuhr zumindest eines Gasstromes (6) gegen die Werkstückoberfläche, **dadurch gekennzeichnet**, daß die Mittel zur Zufuhr des zumindest eines Gasstromes (6) eine zum Laserstrahl (1) nicht koaxial angeordnete Düse (4) umfassen und die Vorrichtung so ausgebildet ist, daß der Gasstrom (6) insgesamt oder zumindest im Mittelwert eine Geschwindigkeit unter 10 m/s aufweist.

12. Vorrichtung nach Anspruch 11, dadurch gekennzeichnet, daß die Vorrichtung so ausgebildet ist, daß der Gasstrom (6) insgesamt oder zumindest im Mittelwert eine Geschwindigkeit zwischen 0,01 m/s und 5 m/s, vorzugsweise zwischen 0,1 m/s und 1 m/s, aufweist.

13. Vorrichtung nach einem der Ansprüche 11 oder 12, dadurch gekennzeichnet, daß die Vorrichtung so ausgebildet ist, daß die vom Gasstrom (6) durchströmte Fläche am Düsenaustritt zumindest fünfhundert mal größer ist als die vom Laserstrahl bestrahlte Fläche auf der Werkstückoberfläche (3).

14. Vorrichtung nach einem der Ansprüche 11 bis 13, dadurch gekennzeichnet, daß die Vorrichtung so ausgebildet ist, daß die vom Gasstrom (6) durchströmte Fläche am Düsenaustritt zumindest 50 mm² beträgt.

15. Vorrichtung nach einem der Ansprüche 11 bis 14, dadurch gekennzeichnet, daß die zum Laserstrahl nicht koaxial angeordnete Düse (4) Einbauten (8, 9, 10) umfaßt.

16. Vorrichtung nach Anspruch 15, dadurch gekennzeichnet, daß die Einbauten Mittel (9) zur Homogenisierung des Gasstromes umfassen.

17. Vorrichtung nach einem der Ansprüche 11 bis 16, dadurch gekennzeichnet, daß der Düsenaustritt mehrere Öffnungen (11) aufweist.

18. Vorrichtung nach einem der Ansprüche 11 bis 17, dadurch gekennzeichnet, daß ein Winkel (α) zwischen Laserstrahlachse und Strahlrichtung des Gasstromes (6) aus der zum Laserstrahl (1) nicht koaxial angeordneten Düse (4) gegen die Werkstückoberfläche (3) mit einem Wert zwischen 20° und 70° vorliegt.

19. Vorrichtung nach einem der Ansprüche 11 bis 18, dadurch gekennzeichnet, daß Mittel (7) vorgesehen sind, um ein Einsaugen von Luft durch den Raum zwischen Laserstrahlführung (2) und der zum Laserstrahl nicht koaxial angeordneten Düse (4) zu verhindern oder zu verringern.
